# EUROPEAN PATENT APPLICATION

(11) **EP 2 923 864 A1**
(43) Date of publication of application: **30.09.2015**
(21) Application number: 14161565.8
(22) Date of filing: 25.03.2014
(51) Int. Cl.: B60D 1/62, G01C 21/20, B62D 15/02, B61L 15/00

(54) **Vehicle information node for enabling navigation of vehicle with trailer**

(71) Applicant: Volvo Car Corporation, 40531 Göteborg (SE)
(72) Inventor: Adolfsson, Cecilia, 42160 Västra Frölunda (SE); Persson, Carl, 41521 Göteborg (SE)
(74) Representative: Kraenzmer, Martin

(57) **Abstract**

Method performed by a vehicle information node (100) for enabling navigation of a vehicle (270) with a trailer (370) connected to the vehicle (270), the method comprising: receiving first trailer data concerning the trailer (370), requesting second trailer data concerning the trailer (370) based on the first trailer data, receiving second trailer data, transmitting second trailer data to a navigation control node (200) for navigation of the vehicle with the trailer (370) connected to the vehicle (270).

## Description

### Technical field

The present invention relates generally to a vehicle information node for enabling navigation of a vehicle with a trailer connected to the vehicle.

### Background art

In prior art it is known to facilitate navigation of vehicles having a trailer connected to the vehicle. Trailer assist functions of the art may be based on visual support using rear view cameras in combination with trajectory calculating algorithms. Other solutions features more autonomous approaches where steering is left to a computer of a vehicle via input from a HMI console.

A drawback with the known art is that the ability to control the trailer assistant is based on certain actual trailer parameters which may vary between trailers and need to be manually entered by a driver into the system to adapt to the specific trailer connected to the vehicle. The step of human intervention increases the risk of navigating the trailer based on an erroneous input data, whereby the risk that obstacles or even humans are hit during navigation increases.

### Summary of invention

An object of the present invention is to enable a navigation of a vehicle with a trailer, which is faster, safer and more convenient to use for a driver.

According to one embodiment a method is provided performed by a vehicle information node for enabling navigation of a vehicle with a trailer connected to the vehicle, the method comprising:
- receiving first trailer data concerning the trailer
- requesting second trailer data concerning the trailer based on the first trailer data,
- receiving second trailer data,
- transmitting second trailer data to a navigation control node for navigation of the vehicle with the trailer connected to the vehicle.

According to another embodiment, the method further comprises determining navigation characteristics for the vehicle based on the received second trailer data.

According to another embodiment, the first trailer data comprises trailer identification data.

According to another embodiment, trailer identification data comprises either registration number, trailer product number, code number, bar code, other individual identification number or individual markings.

According to another embodiment, the second trailer data comprises at least one of: length, width, height, maximum allowed height, weight, maximum allowed weight, distance between the trailer coupling and trailer wheel axle and amount of wheel axles of the trailer.

According to another embodiment, first trailer data is received from the trailer by wire or wirelessly.

According to another embodiment the first trailer data or second trailer data is received from a keyboard device.

According to another embodiment the second trailer data is received from a remote node or the trailer node.

According to another embodiment, the second trailer data is received from an internal database of the vehicle information node, storing first and second trailer data.

According to another embodiment, the method further comprising:
- receiving a connection confirmation signal from a sensor unit sensing a connection between the vehicle and the trailer,
- requesting first trailer data from the trailer node and/or operator, and or other nodes, e.g. a camera node.

According to another embodiment a vehicle information node is provided for enabling navigation of a vehicle with a trailer connected to the vehicle, the node is arranged to
- receive first trailer data concerning the trailer by a vehicle. communication unit,
- request second trailer data concerning the trailer based on the first trailer data by a controller
- receive second trailer data from a remote node by an external remote node communication unit or an internal database by a vehicle communication unit,
- transmit second trailer data to a navigation control node for navigation of the vehicle with the trailer connected to the vehicle.

According to another embodiment, the vehicle information node is further being arranged to
- determine navigation characteristics for the vehicle based on the received second trailer data in a determination unit.

According to another embodiment, a computer program is provided, comprising computer readable code means, which when run in a connected vehicle information node arranged to enable navigation of a vehicle with a trailer connected to the vehicle causes the connected vehicle information node arranged to enable navigation of a vehicle with a trailer connected to the vehicle to perform the method according to any of the above embodiments, for example as described in [0005]-[0014].

According to another embodiment, a computer program product is provided, comprising a computer readable medium and a computer program according to the above embodiment, for example as described in [0017], wherein the computer program is stored on the computer readable medium.

According to another embodiment, a vehicle or vessel is provided comprising a vehicle information node according to any of the previously described embodiments, for instance according to [0015]-[0016].

### Brief description of drawings

The invention is now described, by way of example, with reference to the accompanying drawings, in which:
Fig. 1 shows a perspective view of a vehicle comprising a vehicle information node according to the invention.
Fig. 2 is a flow chart illustrating a procedure in a vehicle information node.
Fig. 3 is a model of a trailer 370 connected to a vehicle 270
Fig. 4 is a block diagram illustrating embodiments of a navigation solution.
Fig. 5 illustrates example embodiments of a vehicle information node.
Fig. 6 shows an illustration of embodiments of a vehicle information node.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

Trailers referred to hereinafter may for instance comprise any of the following: utility trailers, boat trailers, single axle trailers, home trailers, caravans, articulated vehicles, semi-trailers, etc. According to one embodiment, a trailer is an unpowered vehicle pulled by a powered vehicle. A vehicle may comprise any type of vehicle including but not limited to a car or a commercial vehicle, truck or lorry.

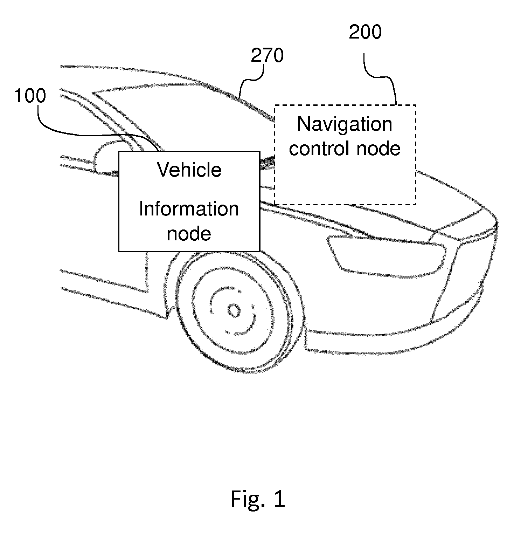

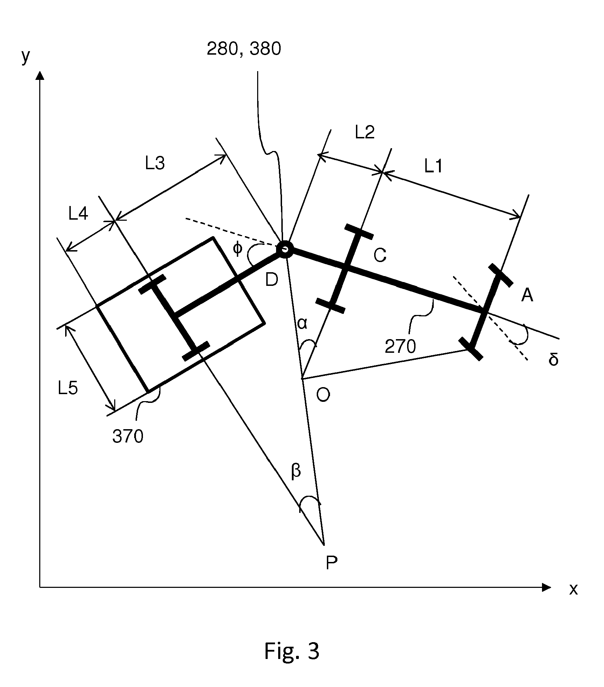

Fig.1 shows a perspective view of a vehicle 270 comprising a vehicle information node 100 for enabling navigation of a vehicle 270 with a trailer 370, as seen in Fig. 3, connected to the vehicle 270, wherein the vehicle information node 100 may comprise one of e.g. the following: a TEM (Telematics Module), a CEM (Central Electronic Module) or an ECU (Electronic Control Module)- The vehicle 270 further comprises a vehicle navigation node 200 for navigation of the vehicle 270 with the trailer 370 connected to the vehicle 270, wherein the vehicle navigation node 200 may comprise one of e.g. the following: a CEM, ECU, IHU (Integrated Head Unit), DIM (Driver Information Module), a PSCM (Power Steering Control Module).

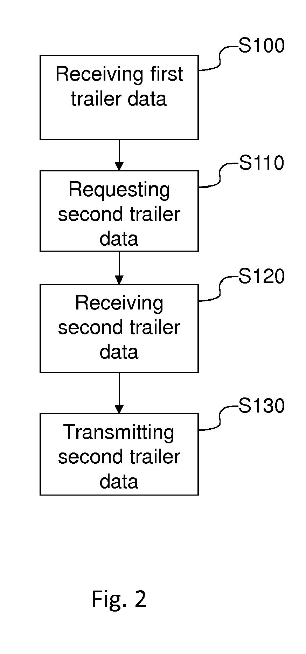

A procedure or method in a vehicle information node 100 for enabling navigation of a vehicle 270 with a trailer 370, as seen in Fig. 3, connected to the vehicle will now be described with reference to Fig. 2. In a first step S100, first trailer data is received in a vehicle information node 100. First trailer data may for instance be received from the trailer 370 and a trailer node 300 comprised in the trailer 370, either by wire, resulting from the connection of the vehicle 270 to the trailer 370, or wirelessly, via for example WiFi/Wireless Local Area Network (WLAN), Bluetooth, Radio Frequency Identification (RFID), ZigBee not limiting to other wireless communication means suitable for short or media range wireless communication. In an embodiment the communication between the vehicle 270 and the trailer 370 is performed over CAN bus (Controller Area Network). Such a CAN bus based communication may be performed by wire or wirelessly. According to one embodiment, the vehicle information node 100 receives a connection confirmation signal from a sensor unit 120 sensing a connection between the vehicle 270 and the trailer 370. According to one embodiment, the vehicle information node 100 requests first trailer data from the trailer node 300, and/or other nodes, such as a camera node, and/or an operator or driver of the vehicle. According to one embodiment, a camera node or image acquisition node enables the acquisition of an image or images of the trailer 370, the trailer 370 registration number, other identification features of the trailer such as for instance individual markings that may be a geometrical shape, or code numbers, bar codes, comprising 3D bar codes or individual identification numbers personally defined by a user, for instance may be used to identify the trailers of a trailer rental company to identify the respective trailers. Further, via for instance an image processing or recognition step in the camera node or another node, the trailer may be identified, whereby the first trailer data may be provided and further transmitted to the vehicle information node 100, According to one embodiment, the image processing step may comprise comparison of the image with images of trailers of known identity. The first trailer data may further be received from a keyboard device, wherein the keyboard device is connected to vehicle information node 100 by known connection means, comprising connection by wire or wirelessly. According to one embodiment, the first trailer data may comprise trailer identification data. According to one embodiment, the second trailer data may be received from a keyboard device. According to one embodiment, trailer identification data comprises registration number of the trailer. According to one embodiment, trailer identification data comprises product number of the trailer or other information for identification of the trailer. According to one embodiment, trailer identification data comprises a geometrical shape, or code numbers, bar codes, comprising 3D bar codes or individual identification numbers personally defined by a user. According to one embodiment, the trailer identification data comprises at least one of registration number, trailer product number, code number, bar code, other individual identification number or individual markings. In a next step S110, the vehicle information node 100 requests second trailer data based on the first trailer data. The request may be sent to a remote node 400 or an internal database 150. Second trailer data comprises at least one of, and any combination of: length (L3+L4) of the trailer 370, width L5 of the trailer 370, height of the trailer 370, maximum allowed height of the trailer 370, weight, maximum allowed weight of the trailer 370, distance between the trailer coupling and trailer wheel axle L3 and amount of wheel axles of the trailer 370, as seen in Fig. 3. According to one embodiment, the length of the trailer may be L4. According to one embodiment, the width of the trailer L5 is defined as the widest point of the trailer 370. In a next step S120, the vehicle information node 100 receives second trailer data from the remote node 400 or the internal database 150. In step S130, the vehicle information node 100 transmits second trailer data to a navigation control node 200 for navigation of the vehicle 270 with the trailer 370 connected to the vehicle 270. According to one embodiment, in yet another step the vehicle information node 100 determines navigation characteristics for the vehicle 270 based on the received second trailer data. According to one embodiment, in a further step, the vehicle information node 100 transmits the navigation characteristics to the vehicle navigation control node 200. According to one embodiment, at least one of length L3+L4 or L4, width L5, height , maximum allowed height, weight or maximum allowed weight are relevant boundary data of the trailer 370 in order to avoid obstacles during navigation, reversing and parking of the vehicle 270 with the trailer 370. According to one embodiment, the navigation may be based on navigation data from a GPS or other navigation nodes, defining input regarding the route of travel for the vehicle 270 and trailer 370 to reach a destination, wherein parameters concerning the maximum allowed height or weight of the trailer may be compared to information concerning any restrictions of maximum weight or e.g. presence of tunnels restricting the maximum height on the route/road to be travelled and whereby warnings to the driver of the vehicle 270 with the trailer 370 may be sent as a result. The driver may then be presented to the option of choosing an alternative route to reach the destination.

In an embodiment, not shown in the figures, an illustrative procedure may comprise the following steps. A person aiming to navigate a vehicle with a trailer connected to the vehicle, also known as "articulated vehicle" especially during parking navigation or reverse driving of the vehicle having a trailer connected to the vehicle may be in need of support to successfully carry out this task most unexperienced drivers find difficult. The driver of the vehicle 270 may either find the trailer 370 already connected to the vehicle 270 or carry out this task for instance in a rental situation of a trailer. The driver manually connects the trailer 370 to the vehicle 270. A sensor unit 120 of a vehicle information node 100 may generate a connection confirmation signal upon sensing that the vehicle 270 is connected to the trailer 370 and further transmit a confirmation signal to the vehicle information node 100. The vehicle information node 100 then requests first trailer data from a trailer node 300 of the now connected trailer 370 and/or from the operator or driver. According to one embodiment, the trailer node 300 then transmits first trailer data such as identification data like a registration number or product number of the trailer 370 to the vehicle information node 100 by wire over a connection line between the trailer 370 and vehicle 270 which may be separate from or integrated with the tow or hitch 280 and tow/hitch receiving connection point 380 of the trailer 370. According to one embodiment the trailer node 300 transmits first trailer data wirelessly. According to one embodiment, for instance if the trailer 370 is an older model lacking a trailer node 300 and ability to transmit first trailer data to the vehicle 270, the operator/driver may be requested to type in the first trailer data manually in a keyboard device. The keyboard device may be integrated in the vehicle, a physical keyboard device, keyboard device generated on a touch-screen or simply part of a vehicles navigation system enabling an operator/driver to select case letters for typing. The keyboard device may further be an operator's/driver's own smartphone, tablet or other portable device connected to the vehicle information node 100 which enables typing. The vehicle information node requests second trailer data concerning the trailer 370 based on the first trailer data from a suitable location and receives second trailer data. In an embodiment, the second trailer data may be obtained from the trailer 370, for example from the trailer node 300. According to one embodiment, the vehicle information node 100 transmits the second trailer data to a navigation control node 200 for navigation of the vehicle with the trailer 370 connected to the vehicle 270. According to one embodiment, the vehicle information node 100 may determine navigation characteristics based on the received second trailer data. The navigation control node 200 provides navigation of the vehicle with the connected trailer 370 using the second trailer data.

Procedures for navigating a vehicle 270 with an articulated trailer 370 are known in the art. Fig. 3 discloses a model of a trailer 370 connected to a vehicle 270 and relevant relationships and parameters as further described below. Describing the kinematics of an articulated vehicle comprises for instance the following: the length L1 between the wheel axles of the vehicle 270, the distance L2 between the rear wheel axle and the connection point or hitch point, also known as tow point 380 of the trailer 370, the angle φ between the trailer 370 and the vehicle 270 and the steering angle δ of the vehicle 270.

According to one embodiment, the navigation control node 200 receives further input regarding the length L1 between the wheel axles of the vehicle 270, the distance L2 between the rear wheel axle and the connection point or hitch point, also known as tow point 380 of the trailer 370. Further, the navigation control node 200 may base the navigation control on input concerning the angle φ between the trailer 370 and the vehicle 270 and the steering angle δ of the vehicle 270, but also the speed over ground of the vehicle 270. This data is available from and stored in the vehicle 270, and in the case of φ and δ sensing units such as potentiometers and the vehicle's CAN-bus in the vehicle 270, and are not specifically related to the trailer 370 as such. Challenges relate to for instance controlling of non-linear systems, and known controllers are for instance the gain scheduling controller or the Lyapunov based controller. The navigation control node 200 may comprise such controllers. Other challenges related to avoiding jack-knifing, an uncontrollable state in the sense that a driver of a vehicle with a trailer cannot further steer or straighten the trailer during reverse. Reference signals need to be generated. According to one embodiment, a HMI interface may be used in the vehicle 270 for directly steering the vehicle according to driver input. The HMI may be comprised by a joystick device, used as an input console, and enabling a driver either to specify if the trailer 370 should move to the right tor to the left or the degrees for the desired angle between the vehicle 270 and the trailer 370 whereby this is fed to the navigation control node 200 as a reference value, whereby the navigation control node 200 calculates a new steering wheel angle and feeds to an EPAS (Electric Power Assisted Steering)-actuator. According to one embodiment, the HMI is used to steer the articulated vehicle automatically, it needs to generate a reference signal according to a user defined goal given the starting location. A potential field method and an optimization algorithm may be introduced in order to find a path between the starting point and the goal without colliding with any predefined obstacles. The x and y coordinates making up the path are converted to a reference angle that is used with the navigation control node 200. According to one embodiment, the driver only controls the brake and/or the propulsion system of the vehicle 270.

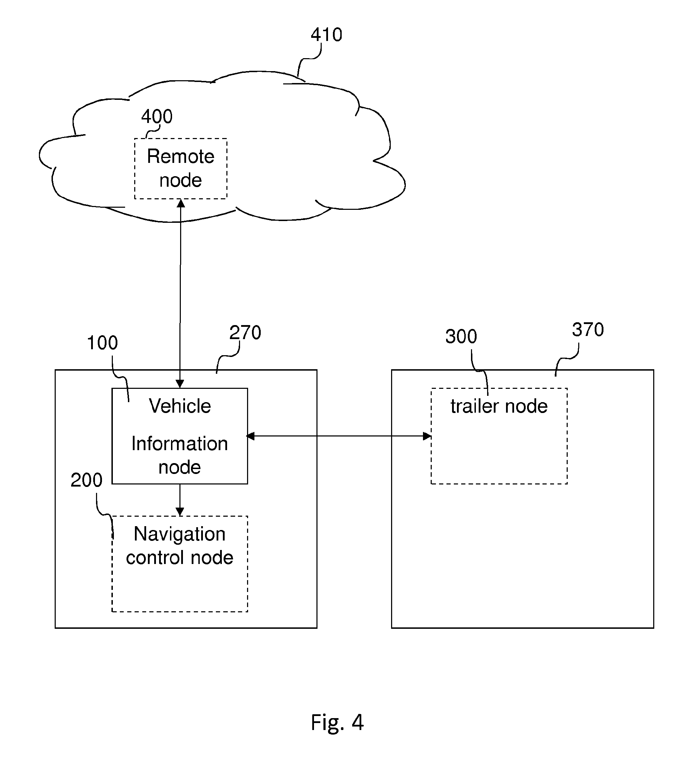

Fig. 4 shows an illustration of embodiments with the vehicle information node 100, navigation control node 200, trailer node 300, a computer environment 410 comprising a remote node 400.

The remote node 400 may be arranged in the computer environment 410. Examples of computer environments are, network connected computer, application server, web server, data facility, computer cloud, hosting service, not limiting the term computer environment to other suitable terms for a computer environment 410. The computer environment 410 may be arranged such that the remote node 400 may be enabled to communicate with vehicle information node 100. The communication may be performed over the public Internet, or a virtual private network over the Internet, or a closed TCP/IP-network, carried by GSM/GPRS (Global System for Mobile Communications/ General Packet Radio Service), 3G (third generation of mobile telecommunications technology), LTE (Long term Evolution), WLAN, Satellite, or an operator/service provider specific network for information services, not limiting the solution to use other types of networks.

Upon connection of the trailer 370 to the vehicle 270, first trailer data is transmitted by either the trailer node 300 to the vehicle information node 100 by wire or wirelessly, or via a keyboard device by an operator typing in first trailer data. The vehicle information node 100 requests second trailer data concerning the trailer 370 based on the first trailer data from an internal database 150, the remote node 400, the trailer node 300 or from a keyboard device by an operator. The first trailer data, identifying the trailer 370 connected to the vehicle 270 is matched with a pre-stored, second trailer data in the remote node 400 or the internal database 150. According to one embodiment, first and second trailer data is stored in the internal database 150 and/or the remote node 400. The pre-stored second trailer data and first trailer data may be information available in a national vehicle or traffic register comprising registration number of vehicles and information concerning the vehicle having a specific registration number. Such vehicles comprise trailers 370. In an embodiment, the pre-stored second trailer data and first trailer data may be information available in a vendor database, of vendors of for example trailers 370. According to one embodiment, the pre-stored first and second trailer data may be defined by an operator, relating personally defined first trailer data to second trailer data and storing this data in the internal database 150 or the remote node 400, for instance by using a keyboard device. Said information may comprise the length L3+L4 or L4, the width L5, distance between the trailer coupling and trailer wheel axle L3 and amount of wheel axles of the trailer 370. The vehicle information node 100 receives second trailer data from the remote node 400, the internal database 150, the trailer node 300, or from a keyboard device. The vehicle information node 100 transmits second trailer data to the navigation control node 200 for navigation of the vehicle 270 with the trailer 370 connected to the vehicle 270.

According to one embodiment, the internal database 150 and the remote node 400 is updated according to the national vehicle or traffic register on a regular basis. According to one embodiment, the remote node 400 is the national vehicle or traffic register.

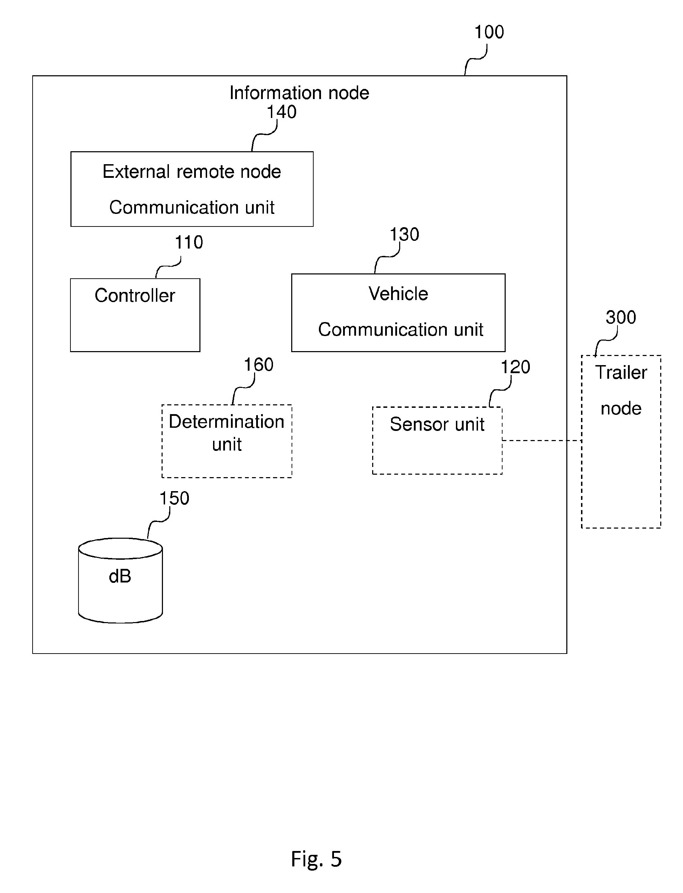

Fig. 5 discloses a vehicle information node 100 for enabling navigation of a vehicle 270 with a trailer 370 connected to the vehicle 270. The node 100 is arranged to receive first trailer data concerning the trailer 370 by a vehicle communication unit 130. A controller 110 is thereafter arranged to request second trailer data concerning the trailer 370 based on the first trailer data. A vehicle communication unit 140, such as an external remote node communication unit 140 is arranged to receive second trailer data from a remote node 400 or an internal database 150. The node 100 is further being arranged to transmit second trailer data to a navigation control node 200 for navigation of the vehicle with the trailer 370 connected to the vehicle 270. The second trailer data may be transmitted by the vehicle communication unit 130. The node may further be arranged to determine navigation characteristics for the vehicle 270 based on the received second trailer data in a determination unit 160. The determination of navigation characteristics may be performed by the controller 110. The navigation characteristics may than be transmitted by the vehicle communication unit 130 to the navigation control node 200.

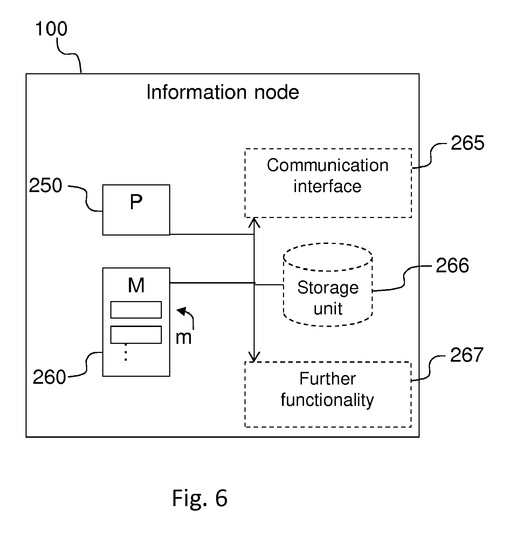

Fig. 6 shows an illustration of embodiments of a vehicle information node 100. The vehicle information node 100 may be implemented, by means of program modules of a respective computer program comprising code means which, when run by a processing unit 250 causes the vehicle information node100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the vehicle information node 100, shown in Fig. 1, 2, 5, 6, et al, in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the vehicle information node 100.

The vehicle information node 100 may further comprise a communication interface 265. The communication interface 265 may be arranged to communicate with for example the sensor unit 120, vehicle navigation node 200, trailer node 300 or remote node 400. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11 (Institute of Electrical and Electronics Engineers), including but not limited to 802.11 a/b/n or other similar forthcoming standards. The communication interface 265 may comprise an antenna. The communication interface 265 may be connectable to an external antenna. The vehicle information node 100 may further comprise one or more storage units 266 and further functionality 267 useful for the vehicle information node 100 to serve its purpose as vehicle information node, such as power supply, internal communications bus, internal cooling, database engine, operating system, not limiting to other functionalities.

A preferred embodiment of vehicle information node according to the invention has been described. However, the person skilled in the art realizes that this can be varied within the scope of the appended claims without departing from the inventive idea.

All the described alternative embodiments above or parts of an embodiment can be freely combined without departing from the inventive idea as long as the combination is not contradictory.

## Claims

1. Method performed by a vehicle information node (100) for enabling navigation of a vehicle (270) with a trailer (370) connected to the vehicle (270), the method comprising:
- receiving first trailer data concerning the trailer (370)
- requesting second trailer data concerning the trailer (370) based on the first trailer data,
- receiving second trailer data,
- transmitting second trailer data to a navigation control node (200) for navigation of the vehicle with the trailer (370) connected to the vehicle (270).

2. Method according to claim 1, further comprising:
- determining navigation characteristics for the vehicle (270) based on the received second trailer data.

3. The method according to claim 1 or 2, wherein the first trailer data comprises trailer identification data.

4. The method according to claim 2, wherein trailer identification data comprises at least one of registration number, trailer product number, code number, bar code, other individual identification number or individual marking.

5. The method according to any of the previous claims, wherein the second trailer data comprises at least one of: length, width, height, maximum allowed height, weight, maximum allowed weight, distance between the trailer coupling and trailer wheel axle and amount of wheel axles of the trailer (370).

6. The method according to any of the previous claims, wherein first trailer (300) data is received from the trailer (370) by wire or wirelessly.

7. The method according to any of the previous claims, wherein the first trailer data or second trailer data is received from a keyboard device.

8. The method according to any of the previous claims, wherein the second trailer data is received from a remote node (400) or the trailer node (300)

9. The method according to any of the previous claims, wherein the second trailer data is received from an internal database (150) of the vehicle information node (100), storing first and second trailer data.

10. The method according to any of the previous claims, further comprising:
- receiving a connection confirmation signal from a sensor unit (120) sensing a connection between the vehicle and the trailer,
- requesting first trailer data from the trailer node (300) and/or operator, and/or other nodes such as e.g. a camera node.

11. A vehicle information node (100) for enabling navigation of a vehicle with a trailer (370) connected to the vehicle (270), the node (100) is arranged to
- receive first trailer data concerning the trailer (370) by a vehicle. communication unit (130),
- request second trailer data concerning the trailer (370) based on the first trailer data by a controller (110)
- receive second trailer data from a remote node (400) by an external remote node communication unit (140) or an internal database (150) by a vehicle communication unit (130),
- transmit second trailer data to a navigation control node (200) for navigation of the vehicle with the trailer (370) connected to the vehicle (270).

12. The vehicle information node (100) according to claim 11, further being arranged to
- determine navigation characteristics for the vehicle (270) based on the received second trailer data in a determination unit (160).

13. A computer program, comprising computer readable code means, which when run in a connected vehicle information node (100) arranged to enable navigation of a vehicle (270) with a trailer (370) connected to the vehicle (270) causes the connected vehicle information node (100) arranged to enable navigation of a vehicle (270) with a trailer connected to the vehicle (270) to perform the method according to any of the claims 1-10.

14. A computer program product, comprising a computer readable medium and a computer program according to claim 13, wherein the computer program is stored on the computer readable medium.

15. Vehicle (270) or vessel (280) comprising a vehicle information node (100) according to any of the previous claims 11-12.
